# EUROPÄISCHE PATENTSCHRIFT

(11) **EP 2 376 273 B1**
(45) Veröffentlichungstag und Bekanntmachung des Hinweises auf die Patenterteilung: **16.09.2015**
(21) Anmeldenummer: 10700370.9
(22) Anmeldetag: 08.01.2010
(51) Int. Cl.: B29C 65/40, B29C 47/38, B29C 47/88, B29C 47/92

(54) **HANDSCHWEISSEXTRUDER MIT HALTEGRIFF FÜR DIE EINHANDBEDIENUNG**
HAND-HELD EXTRUDER COMPRISING A HANDLE FOR SINGLE-HANDED OPERATION
EXTRUDEUSE SOUDEUSE MANUELLE AVEC POIGNEE DE MAINTIEN POUR UTILISATION D'UNE SEULE MAIN

(30) Priorität: 10.01.2009 DE 102009004307
(43) Veröffentlichungstag der Anmeldung: 19.10.2011
(73) Patentinhaber: Dohle Extrusionstechnik GmbH, 53809 Ruppichteroth (DE)
(72) Erfinder: DOHLE, Peter, Christian, 53809 Ruppichteroth (DE)
(74) Vertreter: Fritz & Brandenburg Patentanwälte
(86) Internationale Anmeldenummer: PCT/EP2010/000058
(87) Internationale Veröffentlichungsnummer: WO 2010/079140

(56) Entgegenhaltungen:
- EP-A1- 1 634 688
- EP-A1- 1 634 689
- WO-A1-2008/141685
- DE-A1-102004 043 376
- DE-C1- 4 119 137
- DE-U1-202005 003 919

## Beschreibung

Die vorliegende Erfindung betrifft einen Handschweißextruder umfassend eine Extrudereinheit mit Extruderschnecke, eine Antriebseinheit mit Motor und Getriebe für den Antrieb der Extruderschnecke, eine Heißlufteinheit mit Heißluftdüse und ein äußeres Gehäuse, welches einen etwa zylindrischen Abschnitt umfasst, der als Haltegriff zum Halten des Handschweißextruders dient, wobei Heißlufteinheit mit Heißluftdüse einerseits und Extrudereinheit mit Extruderschnecke andererseits in einem vorderen Geräteabschnitt jeweils in voneinander getrennten Gehäusen (Extrudergehäuse, Heißluftgehäuse) untergebracht sind, deren jeweilige Gehäuseachsen zueinander parallel oder in einem flachen Winkel verlaufen.

Handschweißextruder sind bislang üblicherweise als so genannte Zwei-Hand-Geräte ausgeführt und ähneln im Design einer Handbohrmaschine. Sie werden mit der einen Hand am Schaft gehalten und mit der zweiten Hand im vorderen Bereich. Es kann auch die Verbindung einer Extrudereinrichtung mit einem Bohrmaschinenantrieb vorgesehen sein. Einen Handschweißextruder der vorgenannten Art beschreibt beispielsweise die DE 10 2004 038 967 B3. Diese Geräte können einen größeren Ausstoß von beispielsweise 1,1 kg, 1,8 kg oder bis zu 3 kg Extrudat aufweisen. Sie weisen jedoch ein entsprechend höheres Gewicht auf und müssen mit beiden Händen gehalten werden.

Man hat daher in jüngerer Zeit versucht, kleinere Handschweißextruder zu entwickeln, die zwar einen geringeren Ausstoß haben, dafür aber eine kompaktere Bauweise und ein geringeres Gewicht aufweisen und sich mit nur einer Hand halten lassen. Bei einem solchen aus der DE 20 2007 007 282 U1 bekannten Handschweißextruder weist die Schweißeinheit ein stabförmiges Gehäuse auf mit einem vorderen Schweißabschnitt und einem hinteren Haltegriff. In dem vorderen Schweißabschnitt ist zum einen eine Plastifizierschneckeneinheit mit der Extruderschnecke und einer Wendelheizung angeordnet, die den eingezogenen Kunststoffdraht plastifiziert. Außerdem ist in diesem vorderen Schweißabschnitt auch die Heißlufterzeugungseinrichtung untergebracht, in die zunächst Kaltluft eintritt, die dann über ein Heizelement erhitzt wird und an einer Vorwärmdüse austritt, die sich unmittelbar neben dem Schweißschuh befindet, an deren Austrittsdüse der plastifizierte Kunststoff ausgepresst wird. Aufgrund dieser Anordnung ist es notwendig, in dem zylindrischen Gehäuse des vorderen Schweißabschnitts in konzentrischer Anordnung von innen nach außen die Extruderschnecke, die Wendelheizung, einen Luftspalt, das Heizelement für die Heißluft und einen weiteren äußeren Luftspalt anzuordnen, der verhindern soll, dass sich das äußere Gehäuse zu stark erhitzt. Diese konzentrische Anordnung auf vorgegebenem engem Bauraum ist in der Praxis nicht realisierbar, der Luftspalt ist zu schmal, so dass die angestrebte thermische Entkopplung von Plastifizierschnecke und Heißlufterzeugung nicht erreicht wird. Hier ist zu bedenken, dass die Temperaturunterschiede in diesen beiden Bereichen verfahrensbedingt beispielsweise bis zu 80 °C betragen können. Eine Bauweise mit größerem Durchmesser des Gehäuses kommt nicht in Betracht, da dann die Abmessungen und das Gewicht des Handschweißextruders zu groß werden und das Gerät nicht mehr mit einer Hand bedienbar ist.

In der EP 1 634 688 A1 ist ein Handschweißextruder mit den Merkmalen der eingangs genannten Gattung beschrieben, bei dem ebenfalls eine Heizeinrichtung zur Erzeugung der Heißluft für die Vorwärmung mit einem vorgeschalteten Gebläse einerseits und die Extruderschnecke andererseits in jeweils separaten Gehäusen untergebracht sind, die sich etwa parallel zueinander erstrecken. Allerdings ist hier die Trennung beider Gehäuse quasi über die gesamte Länge des Geräts vorgesehen, das heißt beide Gehäuse werden nicht in einem über die axiale Länge gesehen etwa mittleren Bereich zusammengeführt. Zudem handelt es sich hier nicht um ein Gerät, welches für eine Einhandbedienung geeignet ist. An dem oberen Gehäuse ist ein quer zur Gehäuseachse seitlich wegragender Handgriff angeordnet, an dem der Bediener mit der einen Hand angreift, während er mit der anderen Hand das Gehäuse selbst hält. Auch sind die Abmessungen des Geräts bedingt durch die Verwendung zweier durchgehend separater Gehäuse so, dass das Gerät breiter wird und sich nicht mehr mit nur einer Hand handhaben lässt.

Die EP 0 594 889 A1 offenbart einen weiteren Handschweißextruder, bei dem neben dem Schneckengehäuse ein zweites separates Gehäuse mit einem Lufterhitzer für die Vorwärmluft vorgesehen ist. Beide Gehäuse erstrecken sich parallel über die gesamte Länge des Geräts, wodurch sich eine breitere Bauform ergibt. Der Antrieb für den Schneckenextruder, der demjenigen einer Bohrmaschine ähnlich ist, befindet sich hier im hinteren Bereich des Geräts. Zwischen dem Getriebe und dem Antrieb ist hier ein Gebläse mit einem Radiallaufrad angeordnet. Über einen Auslaufkanal wird die Luft über eine Luftleitung einem Lufterhitzer zugeführt, der sich in einem separaten Gehäuse außerhalb des Extrudergehäuses befindet. Bei diesem Gerät wird die Druckluft für die Vorwärmung im Gerät selbst erzeugt, wodurch sich bereits eine recht voluminöse Bauart und auch ein hohes Gewicht des Geräts ergibt. Der Antriebsmotor befindet sich am hinteren Ende des Geräts und der Antrieb wird gleichzeitig genutzt, um das Gebläse anzutreiben. Für die Kühlluft ist eine weitere Leitung vorgesehen, die sich außerhalb der beiden Gehäuse befindet. Auch dieses bekannte Gerät hat einen seitlich wegragenden Handgriff und ist auch wegen seines Gewichts für eine Bedienung mit zwei Händen vorgesehen.

Die EP1 634 689 A1, WO2008/141685 A1 und DE20 2005003919 U1 offenbaren weitere Handschweissextruder.

Die Aufgabe der vorliegenden Erfindung darin, einen Handschweißextruder der eingangs genannten Gattung zur Verfügung zu stellen, bei dem eine effektive thermische Trennung der Heizvorrichtung für den Schweißdraht einerseits und der Heißlufterzeugung andererseits gegeben ist und der dabei dennoch eine Ein-Hand-Bedienung zulässt.

Die Lösung dieser Aufgabe liefert ein Handschweißextruder der eingangs genannten Gattung mit den kennzeichnenden Merkmalen des Hauptanspruchs. Erfindungsgemäß ist vorgesehen, dass Extrudergehäuse und Heißluftgehäuse des vorderen Geräteabschnitts über einen Übergangsabschnitt miteinander verbunden sind und in einen gemeinsamen in Achsrichtung dahinter liegenden etwa zylindrischen Gehäuseabschnitt münden, der den Haltegriff für die Einhandbedienung umfasst.

Durch die erfindungsgemäße Verwendung zweier getrennter Gehäuseeinheiten für Extruder einerseits und Heißlufteinrichtung andererseits kann eine effektive thermische Trennung beider Systeme gewährleistet werden. Dies ist in der Praxis für eine exakte Temperaturführung sehr wichtig, da bereits geringe Abweichungen von der Solltemperatur des aufgeschmolzenen Extrudats im Bereich von beispielsweise +/- 5 ° C oder weniger den Schweißvorgang beeinträchtigen können. Durch die erfindungsgemäße Lösung kann dabei ein sehr kompaktes Gerät zur Verfügung gestellt werden, da im hinteren Gehäuseabschnitt vorgegebene maximale Abmessungen eingehalten werden können.

In diesem hinteren Gehäuseabschnitt kann die Bedienungsperson das Gerät bequem mit einer Hand erfassen. Der vorgenannte zylindrische Gehäuseabschnitt ist dabei so dimensioniert, dass der Benutzer beim Ergreifen des Geräts dieses im Bereich des zylindrischen Gehäuseabschnitts mit nur einer Hand umfassen kann. Der Benutzer greift also anders als im Stand der Technik nicht mehr an einem separaten Handgriff an, der seitlich vom Gerät wegragt. Dadurch, dass die beiden separaten Gehäuse nur im vorderen Abschnitt des Geräts voneinander getrennt vorliegen und die Luft erst dort im Heißluftgehäuse erwärmt wird, ist das Gehäuse in dem gemeinsamen mittleren und/oder hinteren zylindrischen Gehäuseabschnitt nicht heiß und man dort das Gerät mit der Hand umgreifen.

Die Luft wird bei einem derartigen kompakten Gerät in der Regel aus einer externen Quelle zugeführt und kann durch einen Ringkanal geleitet werden, der sich in dem zylindrischen Gehäuseabschnitt befindet und dabei Motor und Getriebe ringförmig umgeben kann. Dies ermöglicht nicht nur eine kompakte Bauweise, sondern die zugeführte noch kühle Luft, die Motor und Getriebe umströmt, kann sogar dazu genutzt werden, diese Bauteile zu kühlen.

Bevorzugt wird erst in einem Übergangsabschnitt, der sich bezogen auf das vordere Ende des Geräts (Schweißschuh) vor dem gemeinsamen zylindrischen Abschnitt befindet und sich daher bevorzugt bezogen auf die Gesamtlänge etwa in der Mitte des Geräts oder sogar noch weiter vom befindet, die Trennung der beiden Gehäuseeinheiten eingeleitet. Dort kann der Luftkanal seitlich abzweigen und tritt erst dann in das dort beginnende Heißluftgehäuse ein. Das Heißluftgehäuse beginnt somit erst in diesem vorderen Geräteabschnitt und erstreckt sich somit bevorzugt nur etwa über die Länge der vorderen Hälfte des Geräts.

Die Trennung in zwei separate Gehäuse (Extrudergehäuse und Heißluftgehäuse) im vorderen Abschnitt des Geräts hat den weiteren Vorteil, dass die dort untergebrachten Funktionseinheiten im Reparatur- oder Wartungsfall jeweils für sich rasch zugänglich sind, wodurch das Gerät sehr wartungsfreundlich ist.

Weiterhin ist vorteilhaft, dass bei getrennten Gehäusen die relative Lage der zur Vorwärmung dienenden Heißluftdüse zum Schweißschuh der Extrudereinheit beispielsweise durch Verschieben oder Austausch der Heißluftdüse verändert und somit den gewünschten Verhältnissen optimal angepasst werden kann.

Die thermische Trennung des Extrudergehäuses zur Antriebseinheit kann beispielsweise durch Verwendung geeigneter Werkstoffe wie Duroplast/Glasfaser-Kombinationen erfolgen.

Gemäß einer bevorzugten Weiterbildung der erfindungsgemäßen Aufgabenlösung ist ein äußerer Ringkanal in dem zylindrischen Gehäuseabschnitt vorgesehen, der in einen in dem Übergangsabschnitt angeordneten seitlich von diesem äußeren Ringkanal abzweigenden Luftkanal mündet, welcher dann wiederum mit dem zur Heißluftdüse führenden Kanal in der Heißlufteinheit strömungstechnisch in Verbindung steht. Dieser äußere Ringkanal umgibt dort bevorzugt Motor und Getriebe des Geräts, insbesondere umgibt er diese konzentrisch. Auf diese Weise kann man die Luft beispielsweise zugeführt aus einer externen Druckluftquelle zunächst durch den weiter hinten liegenden Gehäuseabschnitt führen, welcher beispielsweise gleichzeitig den Motor und gegebenenfalls weitere Elemente des Antriebs für den Extruder aufnimmt und dann die Druckluft in dem Übergangsabschnitt seitlich herausführen, so dass diese dann anschließend weiter in dem separaten Gehäuse der Heißlufteinheit geführt wird.

Besonders vorteilhaft für Reparatur oder Wartung des Geräts ist eine bevorzugte Ausführungsvariante der Erfindung, nach der das Heißluftgehäuse und/oder das Extrudergehäuse jeweils unabhängig voneinander nach Lösen entsprechender Befestigungsmittel von dem Gerät abnehmbar sind. Hier war der Aufwand bei den aus dem Stand der Technik bekannten Geräten wesentlich höher, da im Reparaturfall der gesamte vordere Gehäusebereich demontiert werden musste.

Vorzugsweise entspricht der Durchmesser des Heizelements etwa dem Innendurchmesser des Heißluftgehäuses und das Heizelement erstreckt sich nahezu bis zur Mittelachse des Heißluftgehäuses. Dies ist so verstehen, dass ein beispielsweise wendelfömiges Heizelement den verfügbaren Innendurchmesser des Heißluftgehäuses weitgehend, das heißt nahezu vollständig nutzt. Die durch das Innere des Heißluftgehäuses strömende Luft kann durch dieses Heizelement hindurch strömen und dann im Bereich des gesamten Querschnitts des Heizluftgehäuses erwärmt werden. Das Heizelement kann somit entsprechend groß dimensioniert werden. Die Begrenzung ist nur durch den inneren Durchmesser des Heißluftgehäuses gegeben. Es steht somit erheblich mehr Platz für das Heizelement zur Verfügung als in dem aus dem Stand der Technik bekannten Fall, bei dem auch die Extruderschnecke im gleichen Gehäuse untergebracht werden muss, so dass man das Heizelement für die Heißluft nur konzentrisch um die Extruderschnecke herum anordnen kann, wobei man zwischen beiden noch erheblichen Freiraum lassen muss, um überhaupt eine thermische Trennung zu haben.

Die Trennung des Gehäuses im vorderen Bereich des Geräts in zwei Teilgehäuse, nämlich Heißluftgehäuse und Extrudergehäuse kann man bevorzugt konstruktiv beispielsweise so lösen, dass der Übergangsabschnitt zwei miteinander verbindbare einander gegenüberliegende Flansche umfasst, wobei an einem der Flansche oder an beiden Flanschen zum vorderen Ende des Geräts hin gerichtet Extrudergehäuse und Heißluftgehäuse und an einem oder beiden Flanschen zum hinteren Ende des Geräts hin Motorgehäuse und hinterer Gehäuseabschnitt montierbar sind. Die Trennung vollzieht sich somit im Bereich des Übergangsabschnitts. Der hintere Abschnitt des Gehäuses, der das Motorgehäuse umfasst wird in der Regel von dem Extrudergehäuse zum vorderen Ende des Geräts hin in axialer Flucht fortgesetzt. Dieses ist in der Regel so, da die Extruderschnecke von der Motorwelle angetrieben wird. Das Heißluftgehäuse ist dagegen axial und seitlich versetzt zu dem hinteren Gehäuseabschnitt angeordnet. Die Heißluftdüse, die sich am vorderen Ende des Heißluftgehäuses befindet, liegt dann mit Abstand neben dem Schweißschuh, der sich am vorderen Ende des Extrudergehäuses befindet.

Vorzugsweise ist gemäß einer Weiterbildung der Erfindung vorgesehen, dass zwischen Extruderschnecke und Antriebseinheit für den Antrieb der Extruderschnecke wenigstens ein Axialrillenkugellager und/oder wenigstens ein Rillenkugellager angeordnet ist. Dadurch kann man Axialkräfte, die von der Extruderschnecke, mittels derer der eingezogene Kunststoffdraht auch granuliert wird, in axialer Richtung nach hinten zur Getriebe/Motor-Einheit hin wirken, aufnehmen.

Die Bestimmung der jeweiligen Ist-Temperatur der Heißluft ist für einen ordnungsgemäßen Prozessablauf wichtig. Dazu kann man ein Thermoelement verwenden. Die erfindungsgemäße Trennung der beiden Gehäuse bietet die Möglichkeit, dass in dem Heißluftgehäuse wenigstens ein vorzugsweise zentrisch in Achsrichtung ausgerichtetes Thermoelement für die Bestimmung der Temperatur der Heißluft angeordnet ist. Es besteht demnach ausreichend Platz für ein solches Thermoelement, welches aufgrund der Gehäusetrennung durch die Heizpatrone für den Extruder nicht beeinflusst wird.

Durch die Gehäusetrennung steht auch mehr Platz für die Heizpatrone zur Erwärmung des Extrudats zur Verfügung. Vorzugsweise ist diese Heizpatrone in dem Extrudergehäuse so angeordnet, dass sie die Extruderschnecke koaxial umgibt und nach außen hin den Innendurchmesser des Extrudergehäuses weitgehend ausfüllt. Der innere Querschnitt des Extrudergehäuses steht somit allein für die Extruderschnecke und diese Heizpatrone zur Verfügung. Das Extrudergehäuse kann folglich kleiner dimensioniert werden.

Die Trennung der beiden Gehäuse im vorderen Bereich des Geräts hat einen weiteren Effekt. Es ist dadurch möglich, das Gerät so zu konstruieren, dass nur der Innenraum des Heißluftgehäuses und derjenige des hinteren Gehäuseabschnitts von der zugeführten Luft mit Druck beaufschlagt sind. In dem Extrudergehäuse befindet sich keine Druckluft, da diese vorher in dem Übergangsabschnitt abgezweigt wird und von dort aus in das separate Heißluftgehäuse strömt. Eine bevorzugte konstruktive Lösungsvariante sieht vor, dass für die elektrische Versorgung des Extrudergehäuses eine aus diesem herausführende elektrische Leitung über eine Steckverbindung mit einem außen im Bereich des Übergangsabschnitts angeordneten Stecker verbindbar ist. Es ist dann nicht erforderlich, elektrische Versorgungsleitungen aus dem Druckluftbereich heraus zu führen, um zu dem drucklosen vorderen Geräteabschnitt des Extrudergehäuses zu gelangen. Die Leitung für die Versorgung des Extruders kann vielmehr den Kontakt erhalten durch Einstecken in eine vor dem Übergangsabschnitt angeordnete Steckerbuchse oder dergleichen.

Für die Überwachung der Temperatur des Extrudats ist bevorzugt ebenfalls ein Thermoelement vorgesehen. Hier kann man beispielsweise in dem Extrudergehäuse zwischen Extruderschnecke und Düse wenigstens ein ringförmig ausgebildetes Thermoelement für die Bestimmung der Temperatur des Extrudats anordnen. Dies ermöglicht eine besonders kompakte Bauweise in diesem Bereich. Durch die Heißluft kann dieses Thermoelement wegen der Trennung der Gehäuse in keinem Fall beeinflusst werden.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht eines Handschweißextruders gemäß einer möglichen Ausführungsvariante der vorliegenden Erfindung ;
Figur 2 einen Längsschnitt durch einen Handschweißextruder gemäß der vorliegenden Erfindung;
Figur 3 eine vergrößerte Detailansicht eines Ausschnitts aus der Schnittdarstellung von Figur 2 im Bereich des Übergangsabschnitts;
Figur 4 eine weitere vergrößerte Detailansicht eines Ausschnitts aus Figur 2 im hinteren Bereich des Gehäuses;
Figur 5 eine weitere vergrößerte Detailansicht eines Ausschnitts aus Figur 2 im vorderen Bereich des Extrudergehäuses.

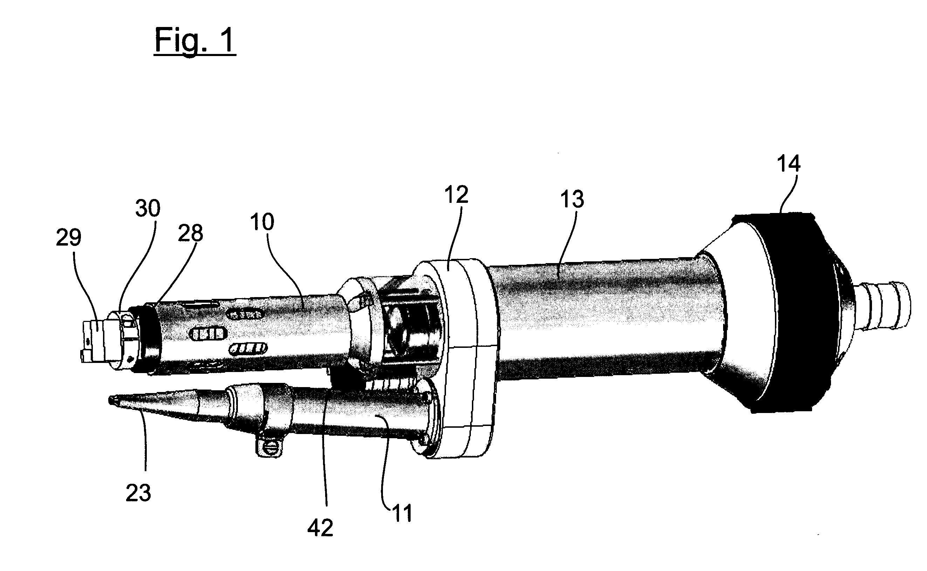

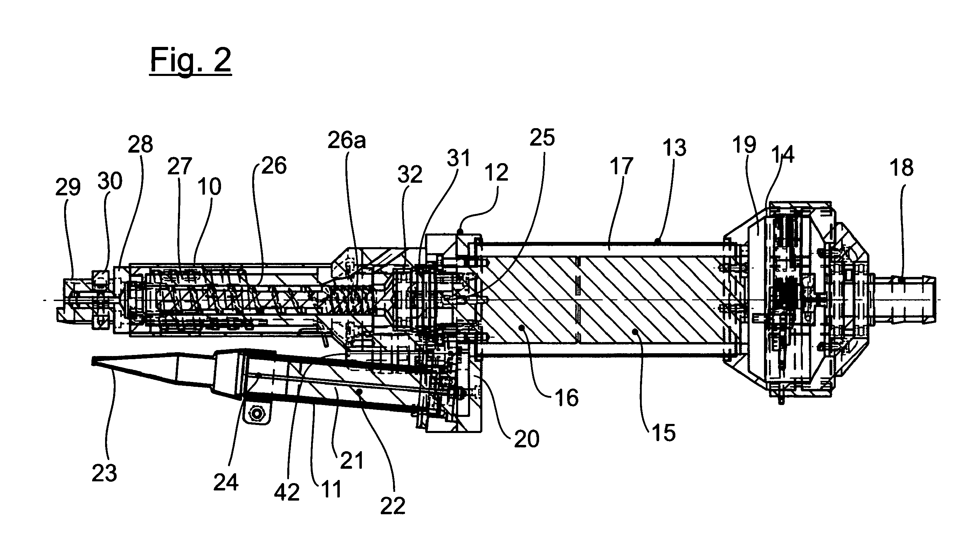

Zunächst wird auf die Figur 1 Bezug genommen, die eine perspektivische Ansicht eines Handschweißextruders gemäß einer möglichen Ausführungsvariante der vorliegenden Erfindung zeigt. Das Gehäuse des Handschweißextruders umfasst einen vorderen Bereich mit zwei voneinander getrennten Gehäusen, nämlich dem Extrudergehäuse 10 und dem Heißluftgehäuse 11, einen Übergangsabschnitt 12, einen in Achsrichtung dahinter liegenden gemeinsamen etwa zylindrischen Gehäuseabschnitt 13 und einen endseitigen im Durchmesser etwas größeren Gehäuseabschnitt 14. Der etwa zylindrische Gehäuseabschnitt 13 umfasst im Wesentlichen das Motorgehäuse und das Getriebegehäuse für den Antrieb des Extruders. Aus der Schnittansicht gemäß Figur 2 ergibt sich, dass in dem Gehäuseabschnitt 13 der Motor 15 und das Getriebe 16 so untergebracht sind, dass sich nach außen zum Gehäuse 13 hin ein Ringkanal 17 für die durchströmende Druckluft ergibt. Die Druckluft tritt beispielsweise von einer externen Druckluftquelle kommend endeitig über einen an eine Tülle 18 angeschlossenen Druckluftschlauch (nicht dargestellt) in das Gehäuseinnere 19 des endseitigen Gehäuseabschnitts 14 ein und gelangt von dort aus in den Ringkanal 17. Da die Druckluft den Motor 15 umspült hat dies gleichzeitig den Effekt, dass der Motor gekühlt wird. Aus dem Ringkanal 17 tritt die Druckluft dann in dem Übergangsabschnitt 12 in einen seitlich radial nach außen führenden Abzweigkanal 20 ein und gelangt von dort aus in das Innere 21 des Heißluftgehäuses 11. Dort ist ein wendelförmiges Heizelement 22 angeordnet, welches die weiter in axialer Richtung durch das Heißluftgehäuse 11 strömende Druckluft erwärmt, bis sie zur Heißluftdüse 23 gelangt, an deren vorderem Ende die heiße Druckluft austritt. Die Heißluftdüse 23 läuft zu ihrem vorderen Ende hin spitz zu. In dem Heißluftgehäuse 11 erstreckt sich weiterhin etwa in Achsmitte in axialer Richtung ein Thermoelement 24 zur Bestimmung der Temperatur der Heißluft, wobei dieses Thermoelement 24 nach vom hin das Heizelement 22 überragt.

In axialer Verlängerung zum etwa zylindrischen gemeinsamen Gehäuseabschnitt 13, in dem sich Motor 15 und Getriebe 16 befinden, schließt sich vor dem Übergangsabschnitt 12 das Extrudergehäuse 10 an, dessen Achse mit dem Gehäuseabschnitt 13 fluchtet, was den Vorteil hat, dass die Abtriebswelle 25 des Getriebes unmittelbar die Extruderschnecke 26 antreiben kann. Die Extruderschnecke umfasst in an sich bekannter Weise einen hinteren Abschnitt 26 a mit scharfkantiger Profilierung, in dessen Bereich der eingezogene Kunststoffdraht zerkleinert und granuliert wird, an den sich dann nach vorn hin die eigentliche spiralförmige Extruderschnecke anschließt. Diese Extruderschnecke 26 umgibt koaxial eine Heizpatrone 27 mit Heizwendel, so dass das Extrudat aufgeschmolzen, zum vorderen Ende des Extrudergehäuses 10 (in der Zeichnung nach links) gefördert, durch die Extruderdüse 28 gepresst und dem Schweißschuh 29 zugeführt wird, wo das Extrudat austritt. Für die abnehmbare Befestigung des Schweißschuhs 29 am Extrudergehäuse 10 dient ein zweiteiliger mittig geteilter Klemmring 30, so dass eine einfache Demontage des Schweißschuhs 29 möglich ist.

Da das Extrudat in axialer Richtung durch das Extrudergehäuse 10 gepresst wird, ist zur Aufnahme der dabei in Gegenrichtung auftretenden Kräfte zwischen Extruderschnecke 26 und Getriebe 16 auf der Abtriebswelle 25 ein Axialrillenkugellager 31 angeordnet. Außerdem ist für die Lagerung der Welle der Extruderschnecke 26 noch ein Rillenkugellager 32 vorgesehen.

In Figur 1 erkennt man einen beispielsweise fünf-poligen Stecker 42 am Gehäuse vor dem Übergangsabschnitt 12 und neben dem Extrudergehäuse 10, so dass man ein Kabel für die elektrische Versorgung des Extrudergehäuses 10 aus dem nicht unter Druck stehenden Innenbereich des Extrudergehäuses heraus führen und diese elektrische Leitung über eine Steckverbindung mit einem außen am Gehäuse angeordneten Stecker 42 verbinden kann. Dadurch vermeidet man, dass aus dem Druckbereich, der das Innere des zylindrischen Abschnitts 13, des Übergangsabschnitts 12 und des Heißluftgehäuses 11 umfasst, ein Kabel nach außen geführt werden muss, um das Extrudergehäuse elektrisch zu versorgen.

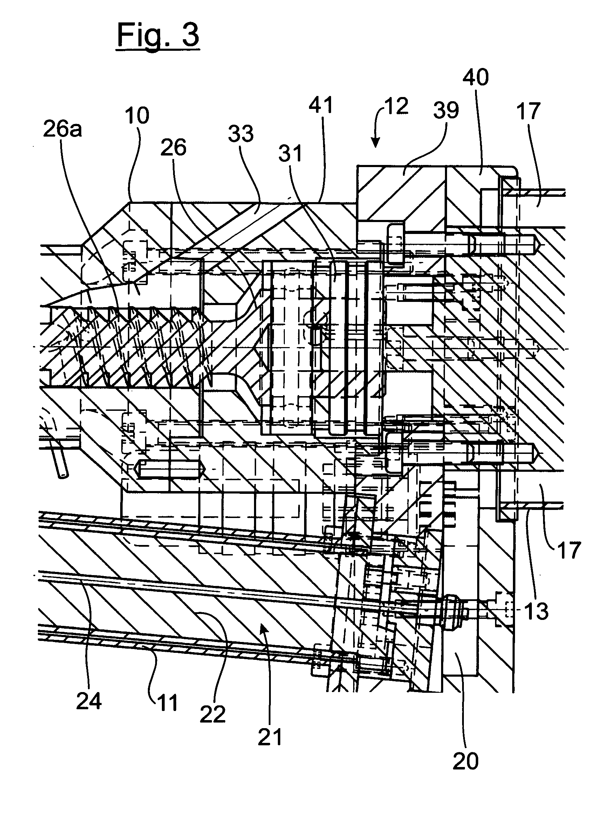

Aus Figur 3, die einen vergrößerten Detailausschnitt aus dem Längsschnitt gemäß Figur 2 im Bereich des Übergangsabschnitts 12 zeigt, lässt sich erkennen, dass dort der Einzugskanal 33 für den in das Extrudergehäuse einzuziehenden Kunststoffdraht vorgesehen ist. Man erkennt außerdem den scharfkantig profilierten hinteren Abschnitt 26 a der Extruderschnecke, mittels dessen dann der eingezogene Kunststoffdraht zerkleinert und mitgenommen wird. Weiterhin sieht man die Abtriebswelle 25 des Getriebes, die mit dem Ende der Extruderschnecke 26 verbunden ist, so dass die Drehbewegung unmittelbar übertragen wird. Das Axialrillenkugellager 31 ist ebenfalls zu sehen. Man sieht den in dem Übergangsabschnitt radial seitlich nach außen führenden Abzweigkanal 20 für die Druckluft, der in das Heißluftgehäuse 11 führt und strömungstechnisch in Verbindung steht mit dem Ringkanal 17. Das Heißluftgehäuse 11 nimmt das Heizelement 21 auf, von dem hier ein Abschnitt zu sehen ist, ebenso wie ein Abschnitt des Thermoelements 24 sichtbar ist.

In Figur 3 sind weiterhin zwei Flansche 39, 40 in dem Übergangsabschnitt 12 erkennbar, nämlich ein vorderer Flansch 39 und ein hinterer Flansch 40, die miteinander verbindbar sind und einander gegenüberliegen, wobei an dem einen Flansch 39 zum vorderen Ende des Geräts hin gerichtet das Heißluftgehäuse 11 befestigbar ist (siehe auch Figur 1) und an den beiden Flanschen 39, 40 zum hinteren Ende des Geräts hin auch Motorgehäuse und hinterer Gehäuseabschnitt montierbar sind. Das eigentliche Extrudergehäuse 10 wird etwas weiter vom montiert (siehe Figur 3 und auch Figur 1), da zwischen diesem und dem Flansch 39 noch ein Gehäuseabschnitt 41 liegt, der unter anderem ein Rillenkugellager aufnimmt.

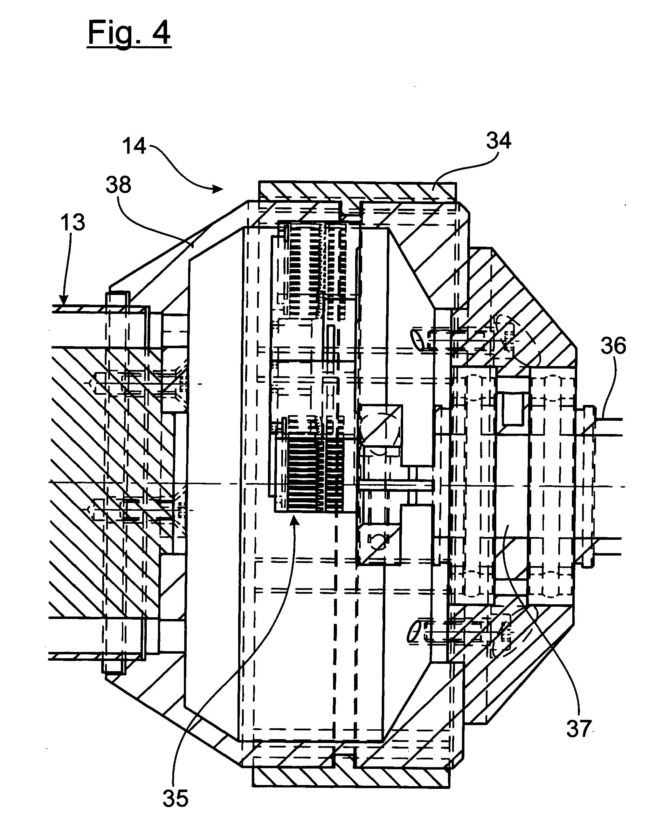

Nachfolgend wird auf Figur 4 Bezug genommen, die eine vergrößerte Detailansicht eines hinteren Bereichs des Handschweißextruders zeigt. Der endseitige Gehäuseabschnitt 14 umfasst eine äußere Kappe 34, die bevorzugt aus Gummi besteht und außen profiliert ist, wie man aus Figur 1 erkennen kann. Dies hat den Sinn, diesen hinteren Gehäusebereich etwas nachgiebig und griffiger zu machen, um beim Ablegen des Geräts zu vermeiden, dass dieses wegrollen kann. Da das abgelegte Gerät auf dem hinteren Gehäuseabschnitt 14 aufliegt, wäre es ungünstig, diesen rein zylindrisch und glatt auszubilden. Wir man weiterhin in Figur 4 erkennt, hat der hintere Gehäuseabschnitt 14 einen etwas größeren äußeren Durchmesser als der beim Arbeiten mit dem Gerät als Handgriff dienende zylindrische Abschnitt 13 (siehe auch Figur 1). Dies hat den Hintergrund, dass eine größere Anzahl von Kabeln von der Rückseite her in das Gerät eingeführt werden und die Verteilung dieser Kabel in dem erweiterten Innenraum 35 des Gehäuseabschnitts 14 erfolgt. Am rückseitigen Ende des Geräts befindet sich eine drehbare Tülle 36, auf der der Schlauch (nicht dargestellt) für die Luftversorgung des Geräts befestigt wird. Durch diesen Schlauch gehen auch gleichzeitig die Kabel für die elektrische Versorgung und die Steuerung der verschiedenen Funktionen des Geräts. Diese Kabel werden dann durch den Kanal 37 in den Innenraum 35 des Gehäuseabschnitts 14 eingeführt, wo dann die Verteilung erfolgt.

In dem Innenraum 35 ist auch ein wichtiges Bauteil für die Sicherheit des Geräts untergebracht, nämlich ein Sensor (nicht dargestellt), dessen Aufgabe es ist, festzustellen, wenn beispielsweise durch äußere Einflüsse die Luftversorgung des Geräts unterbrochen wird, beispielsweise wenn der Druckluftschlauch abgeklemmt wird oder dergleichen. In diesem Fall schaltet der Sensor sofort das Heizelement 22 für die Erwärmung der Druckluft aus, da es andernfalls zu einer gefährlichen Überhitzung im Heißluftgehäuse käme. Auch deshalb wird ein größerer Bauraum im Inneren des hinteren Gehäuseabschnitts 14 benötigt. Dieser Gehäuseabschnitt 14 geht dann zum vorderen Ende des Geräts hin in einem konischen Abschnitt 38 in den zylindrischen Gehäuseabschnitt 13 über.

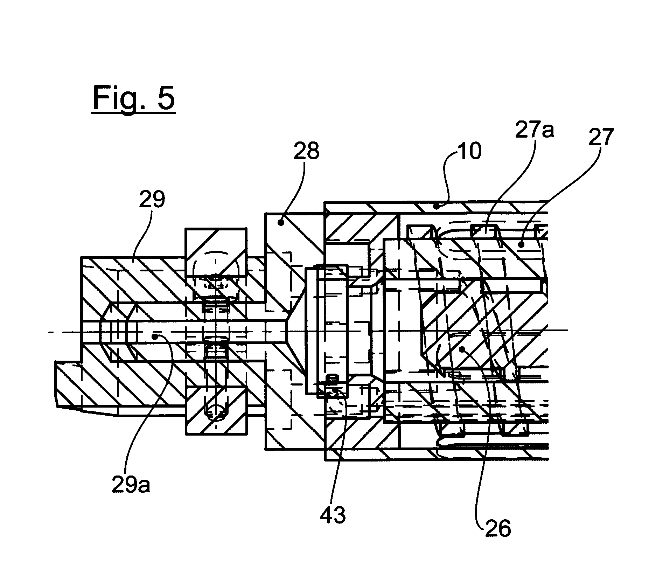

Nachfolgend wird unter Bezugnahme auf Figur 5 noch einmal der Aufbau des vorderen Bereichs des Extrudergehäuses 10 mit Düse 28 und Schweißschuh 29 erläutert. Man erkennt das vordere Ende der Extruderschnecke 26, die sich mittig in dem Extrudergehäuse 10 erstreckt und zwar koaxial zu der Heizpatrone 27 mit der Heizwendel 27 a. Das von der Extruderschnecke 26 geförderte Extrudat gelangt dann in die sich innen verjüngende Düse 28 und tritt aus dieser aus in einen Kanal 29 a im Inneren des Schweißschuhs 29. Beim Schweißen wird so vorgegangen, dass die Heißluftdüse 23 (siehe Figur 2) zur Vorwärmung der zu verschweißenden Kunststoffabschnitte mittels der austretenden Heißluft in Schweißrichtung immer vor dem Schweißschuh 29 angeordnet ist. Wie man weiterhin in Figur 5 erkennt, ist in Strömungsrichtung vor der Düse 28 und im Strömungsweg zwischen Extruderschnecke 26 und Düse 28 ein ringförmiges Thermoelement 43 angeordnet, welches die Temperatur des dort durchtretenden Extrudats aufnimmt. Diese Temperatur ist ein wichtiger Prozessparameter. Durch die ringförmige Bauweise kann der Bauraum dort für das Thermoelement 43 gut genutzt werden.

### Bezugszeichenliste

10 Extrudergehäuse
11 Heißluftgehäuse
12 Übergangsabschnitt
13 zylindrischer Gehäuseabschnitt
14 endseitiger Gehäuseabschnitt
15 Motor
16 Getriebe
17 Ringkanal
18 Tülle
19 Gehäuseinneres
20 Abzweigkanal
21 Inneres des Heißluftgehäuses
22 Heizelement
23 Heißluftdüse
24 Thermoelement
25 Abtriebswelle
26 Extruderschnecke
26 a scharfkantig profilierter Abschnitt
27 Heizpatrone
28 Düse
29 Schweißschuh
29 a Kanal im Inneren
30 Klemmring
31 Axialrillenkugellager
32 Rillenkugellager
33 Einzugskanal
34 Kappe
35 Innenraum
36 Tülle
37 Kanal
38 konischer Abschnitt
39 Flansch
40 Flansch
41 Gehäuseabschnitt
42 Stecker
43 Thermoelement

## Patentansprüche

1. Handschweißextruder umfassend eine Extrudereinheit mit Extruderschnecke, eine Antriebseinheit mit Motor und Getriebe für den Antrieb der Extruderschnecke, eine Heißlufteinheit mit Heißluftdüse und ein äußeres Gehäuse, wobei Heißlufteinheit mit Heißluftdüse (23) einerseits und Extrudereinheit mit Extruderschnecke andererseits in einem vorderen Geräteabschnitt jeweils in voneinander getrennten Gehäusen (Extrudergehäuse 10, Heißluftgehäuse 11) untergebracht sind, deren jeweilige Gehäuseachsen zueinander parallel oder in einem flachen Winkel verlaufen und wobei ein gemeinsamer hinterer Gehäuseabschnitt (13) etwa zylindrisch ist, wobei dieser etwa zylindrische Gehäuseabschnitt (13) das Motorgehäuse und das Getriebegehäuse für den Antrieb des Extruders umfasst und in diesem Gehäuseabschnitt (13) der Motor (15) und das Getriebe (16) untergebracht sind, wobei der hintere Gehäuseabschnitt (13), der das Motorgehäuse umfasst, von dem Extrudergehäuse (10) zum vorderen Ende des Geräts hin in axialer Flucht fortgesetzt wird, **dadurch gekennzeichnet, dass** dieser zylindrische Gehäuseabschnitt (13) beim Arbeiten mit dem Gerät als Handgriff und Haltegriff zum Halten des Handschweißextruders in Einhandbedienung dient,
dass Extrudergehäuse (10) und Heißluftgehäuse (11) des vorderen Geräteabschnitts über einen Übergangsabschnitt (12) miteinander verbunden sind und in den gemeinsamen in Achsrichtung dahinter liegenden etwa zylindrischen Gehäuseabschnitt (13) münden,
in dem ein äußerer Ringkanal (17) vorgesehen ist, der in einen in dem Übergangsabschnitt (12) angeordneten seitlich von diesem äußeren Ringkanal abzweigenden Luftkanal (20) mündet, welcher dann wiederum mit dem zur Heißluftdüse (23) führenden Kanal in der Heißlufteinheit strömungstechnisch in Verbindung steht.

2. Handschweißextruder nach Anspruch 1,
**dadurch gekennzeichnet, dass** das Heißluftgehäuse (11) und/oder das Extrudergehäuse (10) jeweils unabhängig voneinander nach Lösen entsprechender Befestigungsmittel von dem Gerät abnehmbar sind.

3. Handschweißextruder nach einem der Ansprüche 1 oder 2,
**dadurch gekennzeichnet, dass** der Durchmesser des Heizelements (22) etwa dem Innendurchmesser des Heißluftgehäuses (11) entspricht und das Heizelement sich nahezu bis zur Mittelachse des Heißluftgehäuses erstreckt.

4. Handschweißextruder nach einem der Ansprüche 1 bis 3,
**dadurch gekennzeichnet, dass** der Übergangsabschnitt (12) zwei miteinander verbindbare einander gegenüberliegende Flansche (39, 40) umfasst, wobei an dem einen Flansch (39) oder an beiden Flanschen zum vorderen Ende des Geräts hin gerichtet Extrudergehäuse (10) und/oder Heißluftgehäuse (11) und an einem oder beiden Flanschen zum hinteren Ende des Geräts hin Motorgehäuse und zylindrischer Gehäuseabschnitt (13) montierbar sind.

5. Handschweißextruder nach einem der Ansprüche 1 bis 4,
**dadurch gekennzeichnet, dass** zwischen Extruderschnecke (26) und Antriebseinheit (15, 16) für den Antrieb der Extruderschnecke wenigstens ein Axialrillenkugellager und/oder wenigstens ein Rillenkugellager angeordnet ist.

6. Handschweißextruder nach einem der Ansprüche 1 bis 5,
**dadurch gekennzeichnet, dass** in dem Heißluftgehäuse (11) wenigstens ein vorzugsweise zentrisch in Achsrichtung ausgerichtetes Thermoelement (24) für die Bestimmung der Temperatur der Heißluft angeordnet ist.

7. Handschweißextruder nach Anspruch 5,
**dadurch gekennzeichnet, dass** in dem Extrudergehäuse (10) eine die Extruderschnecke (26) koaxial umgebende nach außen hin den Innendurchmesser des Extrudergehäuses weitgehend ausfüllende Heizpatrone (27) zur Erwärmung des Extrudats vorgesehen ist.

8. Handschweißextruder nach einem der Ansprüche 1 bis 7, **dadurch gekennzeichnet, dass** der Innenraum des Heißluftgehäuses (11) und derjenige des zylindrischen Gehäuseabschnitts (13) und nicht der Innenraum des Extrudergehäuses (10) von der zugeführten Luft mit Druck beaufschlagt sind.

9. Handschweißextruder nach Anspruch 8,
**dadurch gekennzeichnet, dass** für die elektrische Versorgung des Extrudergehäuses (10) eine aus diesem herausführende elektrische Leitung über eine Steckverbindung mit einem außen am Gehäuse angeordneten Stecker (42) verbindbar ist.

10. Handschweißextruder nach einem der Ansprüche 1 bis 9,
**dadurch gekennzeichnet, dass** in dem Extrudergehäuses (10) zwischen Extruderschnecke (26) und Düse (28) wenigstens ein ringförmig ausgebildetes Thermoelement (43) für die Bestimmung der Temperatur des Extrudats angeordnet ist.

## Claims

1. A hand extrusion welder comprising an extruder unit with extruder screw, a drive unit with motor and transmission for driving the extruder screw, a hot air unit with hot air nozzle and an outer housing, wherein the hot air unit with hot air nozzle (23) on the one hand and the extruder unit with extruder screw on the other are accommodated in a front device section in respectively separate housings (extruder housing 10, hot air housing 11), the respective housing axes of which run parallel or at a shallow angle to each other, and wherein a shared rear housing section (13) is roughly cylindrical, wherein this roughly cylindrical housing section (13) encompasses the motor housing and transmission housing for driving the extruder, and this housing section (13) incorporates the motor (15) and transmission (16), wherein the rear housing section (13) that encompasses the motor housing continues from the extruder housing (10) to the front end of the device in axial alignment, **characterized in that** this cylindrical housing section (13) serves as a hand grip and handle for holding the hand extrusion welder while working with the device during one-handed operation,
that the extruder housing (10) and hot air housing (11) of the front device section are connected with each other by means of a transitional section (12) and empty into the shared roughly cylindrical housing section (13) lying behind them in an axial direction,
in which is provided an outer annular channel (17) that empties into an air channel (20) that is situated in the transitional section (12) and branches laterally away from this outer annular channel, and is then in turn fluidically connected with the channel leading to the hot air nozzle (23) in the hot air unit.

2. The hand extrusion welder according to claim 1,
**characterized in that** the hot air housing (11) and/or the extruder housing (10) can each be removed from the device independently of each other after the corresponding fasteners have been detached.

3. The hand extrusion welder according to one of claims 1 or 2,
**characterized in that** the diameter of the heating element (22) corresponds to roughly the inner diameter of the hot air housing (11), and that the heating element extends nearly as far as the central axis of the hot air housing.

4. The hand extrusion welder according to one of claims 1 to 3,
**characterized in that** the transitional section (12) encompasses two opposing flanges (39, 40) that can be connected with each other, wherein the extruder housing (10) and/or hot air housing (11) can be mounted on one of the flanges (39) or on both flanges directed toward the front end of the device, and the motor housing and cylindrical housing section (13) can be mounted on one or both flanges toward the rear end of the device.

5. The hand extrusion welder according to one of claims 1 to 4,
**characterized in that** at least one deep groove ball thrust bearing and/or at least one deep groove ball bearing is arranged between the extruder screw (26) and drive unit (15, 16) for driving the extruder screw.

6. The hand extrusion welder according to one of claims 1 to 5,
**characterized in that** the hot air housing (11) incorporates at least one thermocouple (24) preferably centrally aligned in an axial direction for determining the temperature of the hot air.

7. The hand extrusion welder according to claim 6,
**characterized in that** a heating cartridge (27) for heating the extrudate is provided in the extruder housing (10) so as to coaxially envelop the extruder screw (26) and outwardly largely fill the inner diameter of the extruder housing.

8. The hand extrusion welder according to one of claims 1 to 7, **characterized in that** the interior space of the hot air housing (11) and that of the cylindrical housing section (13) are exposed to pressure generated by the supplied air, and not the interior space of the extruder housing (10).

9. The hand extrusion welder according to claim 8,
**characterized in that**, in order to supply power to the extruder housing (10), an electrical line leading from the latter can be connected with a plug (42) arranged outside on the housing by way of a plug connector.

10. The hand extrusion welder according to one of claims 1 to 9,
**characterized in that** at least one annular thermocouple (43) for determining the temperature of the extrudate is arranged in the extruder housing (10) between the extruder screw (26) and nozzle (28).

## Revendications

1. Extrudeuse de soudage manuel, comprenant une unité d'extrusion équipée d'une vis d'extrusion, d'une unité motrice avec moteur et transmission pour l'entraînement de la vis d'extrusion, une unité à air chaud avec buse à air chaud et un boîtier extérieur, l'unité à air chaud avec buse à air chaud (23) d'une part et l'unité d'extrusion avec vis d'extrusion d'autre part étant logées dans une section avant de l'appareil respectivement dans des boîtiers séparés les uns des autres (boîtier d'extrusion 10, boîtier à air chaud 11) dont les axes respectifs de boîtiers sont parallèles les uns aux autres ou s'étendent mutuellement suivant un angle plat et une section arrière commune des boîtiers (13) étant approximativement cylindrique, cette section de boîtier approximativement cylindrique (13) comprenant le carter du moteur et la boîte de transmission pour l'entraînement de l'extrudeuse et le moteur (15) et la transmission (16) étant logés dans cette section de boîtier (13), la section arrière du boîtier (13) qui comprend le carter du moteur se continuant du boîtier d'extrusion (10) jusqu'à l'extrémité avant de l'appareil en alignement axial, **caractérisée en ce que** cette section de boîtier cylindrique (13) sert de poignée manuelle et de poignée de retenue pour maintenir l'extrudeuse de soudage manuel quand on travaille avec l'appareil,
que le boîtier d'extrusion (10) et le boîtier à air chaud (11) de la section avant de l'appareil sont reliés entre eux par une section de transition (12) et débouchent dans la section de boîtier approximativement cylindrique commune (13) se trouvant derrière en direction de l'axe et dans laquelle est prévu un canal annulaire extérieur (17) qui débouche dans un canal à air (20) disposé latéralement dans la section de transition (12) et bifurquant de ce canal annulaire extérieur (23) et qui est à son tour en liaison technique d'écoulement avec le canal menant à la buse à air chaud (23) dans l'unité à air chaud.

2. Extrudeuse de soudage manuel selon la revendication 1,
**caractérisée en ce que** le boîtier à air chaud (11) et/ou le boîtier d'extrusion (10) sont amovibles de l'appareil respectivement indépendamment l'un de l'autre après détachement de moyens de fixation correspondants.

3. Extrudeuse de soudage manuel selon une des revendications 1 ou 2,
**caractérisée en ce que** le diamètre de l'élément chauffant (22) équivaut approximativement au diamètre du boîtier à air chaud (11) et que l'élément chauffant s'étend pratiquement jusqu'à l'axe central du boîtier à air chaud.

4. Extrudeuse de soudage manuel selon une des revendications 1 à 3,
**caractérisée en ce que** la section de transition (12) comprend deux brides opposées (39, 40) pouvant être reliées l'une à l'autre, le boîtier d'extrusion (10) et/ou le boîtier à air chaud (11) étant disposés au niveau d'une des brides (39) ou des deux brides en direction de l'extrémité avant de l'appareil et le carter du moteur et la section de boîtier cylindrique (13) pouvant être montés au niveau de l'une ou des deux brides en direction de l'extrémité arrière de l'appareil.

5. Extrudeuse de soudage manuel selon une des revendications 1 à 4,
**caractérisée en ce que**, entre la vis d'extrusion (26) et l'unité motrice (15, 16), au moins un roulement à billes rainuré axial et/ou au moins un roulement à billes rainuré est disposé pour l'entraînement de la vis d'extrusion.

6. Extrudeuse de soudage manuel selon une des revendications 1 à 5,
**caractérisée en ce que**, dans le boîtier à air chaud (11), est disposé au moins un élément thermique orienté de préférence centré en direction de l'axe (24) pour la détermination de la température de l'air chaud.

7. Extrudeuse de soudage manuel selon la revendication 5,
**caractérisée en ce que**, dans le boîtier d'extrusion (10), il est prévu une cartouche chauffante (27) encadrant coaxialement lavis d'extrusion (26) vers l'extérieur et remplissant en grande partie le diamètre intérieur du boîtier d'extrusion pour chauffer l'extrudat.

8. Extrudeuse de soudage manuel selon une des revendications 1 à 7, **caractérisée en ce que** l'espace intérieur du boîtier à air chaud (11) et celui de la section de boîtier cylindrique (13) mais pas l'espace intérieur du boîtier d'extrusion (10) reçoivent l'air acheminé sous pression.

9. Extrudeuse de soudage manuel selon la revendication 8, **caractérisée en ce que**, pour l'alimentation électrique du boîtier d'extrusion (10), une ligne électrique sortant de celui-ci peut être reliée par enfichage à une fiche (42) disposée sur l'extérieur du boîtier.

10. Extrudeuse de soudage manuel selon une des revendications 1 à 9,
**caractérisée en ce que**, dans le boîtier d'extrusion (10), entre la vis d'extrusion (26) et la buse (28), au moins un élément thermique de conformation annulaire (43) est disposé pour permettre la détermination de la température de l'extrudat.
